# EUROPÄISCHE PATENTSCHRIFT

(11) **EP 0 845 014 B1**
(45) Veröffentlichungstag und Bekanntmachung des Hinweises auf die Patenterteilung: **24.10.2001**
(21) Anmeldenummer: 96929207.7
(22) Anmeldetag: 05.08.1996
(51) Int. Cl.: C08L 33/26, C09J 133/26, C08F 20/56, B05D 5/08

(54) **POLYACRYLAMID MIT NIEDRIGEM MOLEKULARGEWICHT**
POLYACRYLAMIDE WITH LOW MOLECULAR WEIGHT
POLYACRYLAMIDE A FAIBLE POIDS MOLECULAIRE

(30) Priorität: 14.08.1995 DE 19529965
(43) Veröffentlichungstag der Anmeldung: 03.06.1998
(73) Patentinhaber: Henkel Kommanditgesellschaft auf Aktien, 40589 Düsseldorf-Holthausen (DE)
(72) Erfinder: HÜBNER, Norbert, D-40597 Düsseldorf (DE); MÜLLER, Wolf-Rüdiger, D-40724 Hilden (DE); PETERS, Bernd, Willi, D-42657 Solingen (DE); SCHIEFERSTEIN, Ludwig, D-40882 Ratingen (DE)
(86) Internationale Anmeldenummer: EP9603451
(87) Internationale Veröffentlichungsnummer: WO9707162

(56) Entgegenhaltungen:
- GB-A- 1 568 115
- US-A- 4 328 141
- POLYMER, Bd. 26, Nr. 3, März 1985, Seiten 397-405, XP000610733 MICHEL DUVAL ET AL.: "Dynamical studies on low molecular weight polyacrylamide aqueous solution"

## Beschreibung

Die vorliegende Erfindung betrifft die Verwendung einer polyacrylamidhaltigen wäßrigen Zusammensetzung.

Aus der deutschen Offenlegungsschrift 43 39 642 sind Antislipmittel, d. h. Mittel, die eine unbeabsichtigte gleitende Verschiebung zweier Gegenstände zueinander verhindern, bekannt, die aus mindestens einem Kolophoniumharz und/oder dessen Derivat, mindestens einem ein- oder mehrwertigen Alkohol, einem wasserlöslichen oder in Wasser dispergierbaren Verflüssigungsmittel, gegebenenfalls einem Treibmittel und gegebenenfalls einem Verdickungsmittel und aus Wasser als Rest bestehen.

Aus der "Encyclopedia of Polymer Science and Engineering", 2. Auflage, Band 17, John Whiley & Sons, New York, 1989, Seite 730 - 784, insbesondere Seite 753 f., ergibt sich, daß man Polyacrylamid in Klebstoffzusammensetzungen insbesondere in der Papierindustrie wegen seiner Trockenfestigkeit und in der Bauindustrie als Verbundplattenklebstoff einsetzt. Nachteilig bei der Applikation derartiger Klebstoffpolymeren in in Wasser gelöster Form ist allerdings die hohe Viskosität solcher Zusammensetzungen. Sie hat ihre Ursache in dem substanztypisch erhöhten Molekulargewicht des Polymeren, welches wiederum für die später gewünschte mechanische Belastbarkeit sorgt. Erfahrungsgemäß senkt eine zu starke Reduktion des Molekulargewichts die spätere Belastbarkeit des Verbunds erheblich.

In der US 4 328 141 wird eine wäßrige Harzdispersion beschrieben, die zur Stabilisierung eine wirksame Menge eines nichtionischen Copolymerisates aus Acrylamid und einem hydrophoben Monomeren enthält.

In der GB 1 568 115 wird ein nichtionisches, oberflächenaktives Mittel aus Acrylamid-Mischpolymerisaten beschrieben.

Der vorliegenden Erfindung liegt die Aufgabe zugrunde, eine neuartige, polyacrylamidhaltige Klebstoffzusammensetzung bereitzustellen, die die vorgenannten Nachteile einer hohen Viskosität nicht besitzt, zugleich aber eine vergleichbare mechanische Belastbarkeit hat.

Diese Aufgabe wird durch die kennzeichnenden Merkmale von Anspruch 1 gelöst.

Die vorliegende Erfindung betrifft daher die Verwendung einer polyacrylamidhaltigen Zusammensetzung, wobei das Polyacrylamid eine sehr niedrige Molekularmasse von 2.000 bis 8.000 g/mol, vorzugsweise 3.500 bis 5.000 g/mol, bestimmt mittels Gelpermeationschromatographie (GPC), besitzt und dieses Polyacrylamid als 15 Gew.-%ige wäßrige Lösung bei 25 °C eine Brookfield-Viskosität von 5 bis 500 mPas aufweist, für die flächige Verklebung von und/oder auf wasseraufsaugenden oder harten Oberflächen.

Nach einer bevorzugten Ausführungsform enthalten die polyacrylamidhaltigen Zusammensetzungen viskositätsregelnde Additive, wobei es sich beispielsweise um Wasser und/oder ein- oder mehrwertige Alkohole handelt, die vorzugsweise flüssig und bei 25 °C aus dem Klebstoffsystem entsprechend den praktischen Anforderungen verdampfen. Insbesondere werden Alkohole mit einer Löslichkeit von mehr als 3 g in 100 g Wasser bei 25 °C angesetzt. Diese Alkohole können aliphatische oder cycloaliphatische, gesättigte oder ungesättigte Alkohole mit gerader oder verzweigter Kette sein. Sie können auch noch weitere Heteratome enthalten, beispielsweise Sauerstoff in Form einer Ethergruppe.

Beispiele sind Ethanol, n-Propanol, i. Propanol, Butanol, Benzylalkohol, Cyclohexanol, Di-, Tri- und Polyethylenglykol. Bevorzugt werden zwei- und dreiwertige Alkohole, insbesondere Ethan-1,2-diol, Propan-1,2-diol und/oder Propan-1,2,3-triol (Glyzerin).

Die vorgenannten Additive können sowohl aus reinem Wasser wie auch aus Alkoholen bestehen. Dieses Additiv ist in der polyacrylamidhaltigen Zusammensetzung im allgemeinen in einer Menge von 50 bis 95 Gew.-% , vorzugsweise 75 bis 90 Gew.-% zugegen. Bevorzugt, und sofern eine Applikation der polyacrylamidhaltigen Zusammensetzung auf einer Wasser aufsaugenden Oberfläche geschieht, setzt man ein Additivgemisch aus Wasser und 5 bis 30 Gew.-%, vorzugsweise 5 bis 15 Gew.-% eines Alkohols, vorzugsweise Glyzerin, ein, wodurch ein übermäßiges Wellen des mit der Polyacrylamidzusammensetzung beschichteten Papiers vermieden wird. Je nach Menge des eingesetzten Glycerins, also 5 bis 45 Gew.-%, vorzugsweise 10 bis 30 Gew.-% der Polyacrylamidzusammensetzung, kann die Topfzeit zwischen 1 und 360 Minuten eingestellt werden.

Darüber hinaus werden den erfindungsgemäß verwendeten polyacrylamidhaltigen Zusammensetzungen auch ein die Klebrigkeit verstärkendes Mittel hinzugefügt, wobei hier insbesondere Kolophoniumharz mit einer durchschnittlichen Molekularmasse unter 2000 g/mol und/oder dessen Derivat zu nennen ist. Dieses wird beispielsweise aus dem Rohharz von Koniferen enthalten. Es besteht vorwiegend aus ungesättigten Carbonsäuren mit der Bruttoformel C₂₀H₃₀O₂, wie Abietinsäure und ihren Isomeren. Daneben können aber auch mehr oder weniger Neutralstoffe wie Fettsäureester, Terpenalkohole und Kohlenwasserstoffe enthalten sein. Vorzugsweise wird ein derivatisiertes Kolophoniumharz eingesetzt, z. B. ein hydriertes oder disproportioniertes Kolophoniumharz, wobei die Derivatisierung vor allem der Erhöhung der Wasserlöslichkeit dient, beispielsweise die Verseifung oder Addition von Maleinsäure. Brauchbare Kolophoniumharze und seine Derivate sind Balsam-, Tall- und Wurzelharz. Besonders geeignet sind wasserlösliche Balsamharz-Derivate mit einer Löslichkeit von mindestens 3 g in 100 g Wasser bei 25 °C, die unter der Bezeichnung "Flexin® D vertrieben werden. Vorzugsweise werden wasserlösliche Kolophoniumderivate eingesetzt, insbesondere verseifte Derivate.

Als Verflüssigungsmittel einer weiteren Unterart der Zusatzstoffe eignen sich Alkali- oder Erdalkalialkylbenzolsulfonate mit bis zu 18, insbesondere 1 bis 4 Kohlenstoffatomen im Alkylrest, insbesondere aber das Natriumsalz von Propylbenzolsulfonat.

Darüber hinaus kann, soweit die polyacrylamidhaltigen Zusammensetzungen zum Versprühen eingesetzt werden sollen und das Versprühen nicht mittels eines mechanischen Pumpzerstäubers erfolgt, auch ein Treibmittel eingesetzt werden kann, welches beispielsweise ausgewählt ist aus dem gängigen und an sich bekannten Kohlenwasserstofftreibgasen Propan, Butan oder deren Mischungen, die gegebenenfalls mit Ethanol oder mit Dimethylether zusammen eingesetzt werden. Gegebenenfalls kann eine entsprechende Sprühaufbringung auch mittels Kohlendioxid erfolgen.

Darüber hinaus gibt es eine Reihe von sonstigen Hilfs- und Zusatzstoffen, beispielsweise Farbstoffe, Lichtstabilisatoren.

Unter dem Begriff Polyacrylamid versteht man überwiegend Acrylamid enthaltende Copolymerisate und im Extremfall Polyacrylamid selbst. Diese Polyacrylamide weisen einen Copolymergehalt von bis zu 15 Gew.-%, insbesondere bis zu 5 Gew.-% auf. Unter dem Begriff der Acrylamid enthaltenden Copolymeren versteht man kationische Polyelektrolyten, mittels der man wiederum wasserlösliche Polymere mit positiver elektrischer Ladung erhält. Beispiele hierfür sind Diallyldimethylammoniumchlorid, Diallyldiethylammoniumchlorid, Diethylaminoethylmethacrylat, Dimethylaminoethylmethacrylat, Methylacryloyloxiethyltrimethylammoniumsulfat, Methacryloyloxiethyltrimethylammoniumchlorid und 3-(Methacrylamido)propyltrimethylammoniumchlorid sowie die Salze von Acrylsäure oder Methacrylsäure, insbesondere Natriumacrylat. Darüber hinaus können den erfindungsgemäß verwendeten polyacrylamidhaltigen Zusammensetzungen auch amphoterische wasserlösliche Polymere zugesetzt werden, wie die bekannten Polybetaine, Polyampholyten und Interpolymerkomplexe. Bezüglich näherer Einzelheiten zu diesen Polymertypen wird auf die "Encyclopedia of Polymer Science and Engineering", Band 17, 1989, Stichwort: Wasserlösliche Polymere, insbesondere die Seiten 770 bis 778, verwiesen.

Die Konzentration der einzelnen Komponenten in der erfindungsgemäß verwendeten polyacrylamidhaltigen Zusammensetzung beträgt im allgemeinen 5 bis 50 Gew.-%, vorzugsweise 10 bis 25 Gew.-% wenigstens eines Polyacrylamids,
50 bis 95 Gew.-%, vorzugsweise 75 bis 90 Gew.-% eines viskositätsregelnden Additivs,
0 bis 20 Gew.-%, vorzugsweise 0 bis 10 Gew.-% mindestens eines die Klebrigkeit verbessernden Mittels,
0 bis 25 Gew.-%, vorzugsweise 5 bis 15 Gew.-% wenigstens eines wasserlöslichen oder in Wasser dispergierbaren Verflüssigungsmittels.

Die vorliegende Erfindung betrifft weiterhin die Verwendung als nicht wellender Klebstoff, insbesondere als Sprühkleber sowie als Papierkleber. Die polyacrylamidhaltige Zusammensetzung enthält 5 bis 50 Gew.-%, vorzugsweise 10 bis 25 Gew.-% wenigstens eines Polyacrylamids, 50 bis 95 Gew.-%, vorzugsweise 75 bis 90 Gew.-% mindestens eines viskositätsregulierenden Additivs, 0 bis 30 Gew.-%, vorzugsweise 0 bis 15 Gew.-% wenigstens eines die Klebrigkeit verbessernden Stoffes, 0 bis 10 Gew.-%, vorzugsweise 0 bis 5 Gew.-% eines wasserlöslichen oder in Wasser dispergierbaren Verflüssigungsmittels und 0 bis 35 Gew.-%, vorzugsweise 0 bis 25 Gew.-% wenigstens eines Treibmittels für die flächige Verklebung von und/oder auf wasseraufsaugenden oder harten Oberflächen.

Die erfindungsgemäß zu verwendenden polyacrylamidhaltigen Zusammensetzungen werden dadurch erhalten, daß man Acrylamid gegebenenfalls in Gegenwart von Comonomeren einer Polymerisation in Lösung aussetzt und das Reaktionsprodukt aus der Reaktionsmischung abtrennt. Das überschüssige Wasser wird in an sich bekannter Weise abtrennt. Für die erfindungsgemäßen Einsetzungen wird dann das überwiegend Acrylamid enthaltende Copolymere zusammen mit dem viskositätsregelnden Additiv sowie weiteren Hilfs- und Zusatzstoffen zu Anwendungslösungen weiterverarbeitet, wobei der Gehalt an Polyacrylamid und seinen Copolymeren bei einer flächigen Anwendung, im allgemeinen bei 5 bis 50 Gew.-%, bezogen auf die Anwendungslösung eingesetzt wird, beispielsweise beim Aufpinseln oder Aufsprühen mittels Pumpzerstäuber. Bei einer derartigen Anwendung wird vorzugsweise, soweit keine wasseraufsaugenden Gegenstände zugegen sind, als Hauptadditiv Wasser eingesetzt.

Bei einer Verwendung in wasserärmeren Klebstoffen wird als weiteres Additiv bis zu 25 Gew.-% Glycerin eingesetzt, bezogen auf die Gesamtlösung.

Die flächige Verklebung von und/oder auf wasseraufsaugenden oder harten Oberflächen durch Auftragen, Aufpinseln oder Aufsprühen schließt auch die Rutschfestausrüstung von Kunstoffoberflächen wie Polystyrol, Polycarbonat, Polyvinylchlorid, Polyethylen, Polypropylen und Polyethylenterephthalat ein, wobei die Oberflächen erst nach der Trocknung des Mittels in Kontakt gebracht werden.

Die vorliegende Erfindung wird nachstehend durch Ausführungsbeispiele näher erläutert.

### Beispiel 1:

### Synthese eines niedermolekularen Polyacrylamids

10,1 g Natrosol 250 G (eine Hydroxyethylcellulose, die von der Hercules Inc. vertrieben wird), werden in 270 g entmineralisiertem Wasser unter Rühren gelöst. 675 g Acrylamid und 3,4 g Azoisobuttersäuredinitril werden nacheinander in 2.470 g Isopropanol gelöst und die Lösung zu der wäßrigen Lösung gegeben. Es werden 200 g Trockeneis zugegeben. Nach dessen Verdampfung wird der Ansatz auf 60 °C erwärmt. Nach dem durch Eintrübung deutlich erkennbaren Polymerisationsstart führt die entstehende Reaktionsexothermie zum Temperatur-Anstieg. Die Innentemperatur wird durch Außenkühlung auf unter 70 °C gehalten. Nach Abklingen der Exothermie wird der Ansatz eine Stunde bei 75°C gerührt.

Daraufhin wird auf Raumtemperatur abgekühlt, das Lösemittelgemisch von dem gebildeten Pulver abdekantiert und der Rückstand bei 60 °C im Wasserstrahlvakuum getrocknet.

Auf diese Weise werden 670 g eines weißen und gut rieselfähigen Pulvers erhalten, dessen spezifische Viskosität als 1%-ige Lösung in 1-normaler wäßriger Natriumnitratlösung 0,45 beträgt.

### Anwendungsbeispiel 1:

Eine 15%-ige wäßrige Lösung des in Beispiel 1 hergestellten Polyacrylamids wurde mittels dreier Hübe aus einer handelsüblichen Pumpspraydose mit einem Abstand von ca. 10 cm auf eine dreilagige, 50 mm x 80 mm x 4 mm Buchensperrholzplatte zu einer dünnen Schicht aufgesprüht. Jeweils 2 Holzplättchen wurden 2 cm an den Schmalseiten überlappend in Kontakt gebracht, mit jeweils 4 Wäscheklammern fixiert und nach 16 Stunden mit einem Zug von 15 mm/min auf einer Zwick-Zerreißmaschine zerrissen.

Bei sofortiger Fixierung ergibt sich eine mittlere Zugscherfestigkeit von 2,8 N/mm², bei einer Fixierung nach 5 min Ablüftezeit ergibt sich eine mittlere Zugscherfestigkeit von 5 N/mm².

Polymere, die 5 Gew.-% Diethylaminoethylmethacrylsulfat (DMAEMA) oder 5 Gew.-% Natriumacrylat enthalten, zeigen vergleichbare Festigkeiten.

### Anwendungsversuch 2 (Vergleichsbeispiel):

Parallel zu den vorgenannten erfindungsgemäßen Polyacrylamiden wurde ein höhermolekulares Polyacrylamid mit einer Molekularmasse von 15.000 g/mol (bestimmt über GPC), welches einprozentig in 1-normaler Natriumnitratlösung eine spezifische Viskosität von 19,0 aufweist. Bei einem derartigen höhermolekularen Polyacrylamid gemäß Stand der Technik wird erst bei einem deutlich geringeren Polymergehalt von 5 Gew.-% eine für ein Versprühungsverfahren praktikable Brookefield-Viskosität von 3.000 mPas erhalten, war er beim Auftrag mittels Versprühen im Fall des höhermolekularen Typs auch bei einer größeren Verdünnung nicht möglich.

Um den Anwendungsbereich der erfindungsgemäßen Verwendung von polyacrylamidhaltigen Zusammensetzungen zu zeigen, wurden die in der nachfolgenden Tabelle 1 zusammengefaßten weiteren erfindungsgemäßen Anwendungsbeispiele (Formulierungen 2 bis 6) erstellt und gängigen Marktprodukten wie Kontaktklebstoffen auf Basis von Polychlorbutadien in wäßrigen Lösemitteln mit Zusatz von Harzen (Pattex® ) sowie den üblichen Casein-Dispersionen (Optal 702 bzw. Optal 1740) gegenübergestellt.

Aus der nachfolgenden Tabelle 1 ergibt sich, daß die erfindungsgemäß als Klebstoff verwendeten Zusammensetzungen eine höhere Zugscherfestigkeit aufweisen als übliche Casein-Dispersionen und gegenüber Pattex® auch schon bei einem geringeren Feststoffgehalt eine ausreichende Klebkraft und Zugscherfestigkeit aufweisen. Die Papierwellung wurde visuell bestimmt, wobei das Zeichen "--" eine sehr starke Papierwellung, das Zeichen "-" eine starke Papierwellung, das Zeichen "+-" eine durchschnittliche Papierwellung und das Zeichen "+" eine geringere Papierwellung und das Zeichen "++" eine sehr geringe Papierwellung bedeutet.

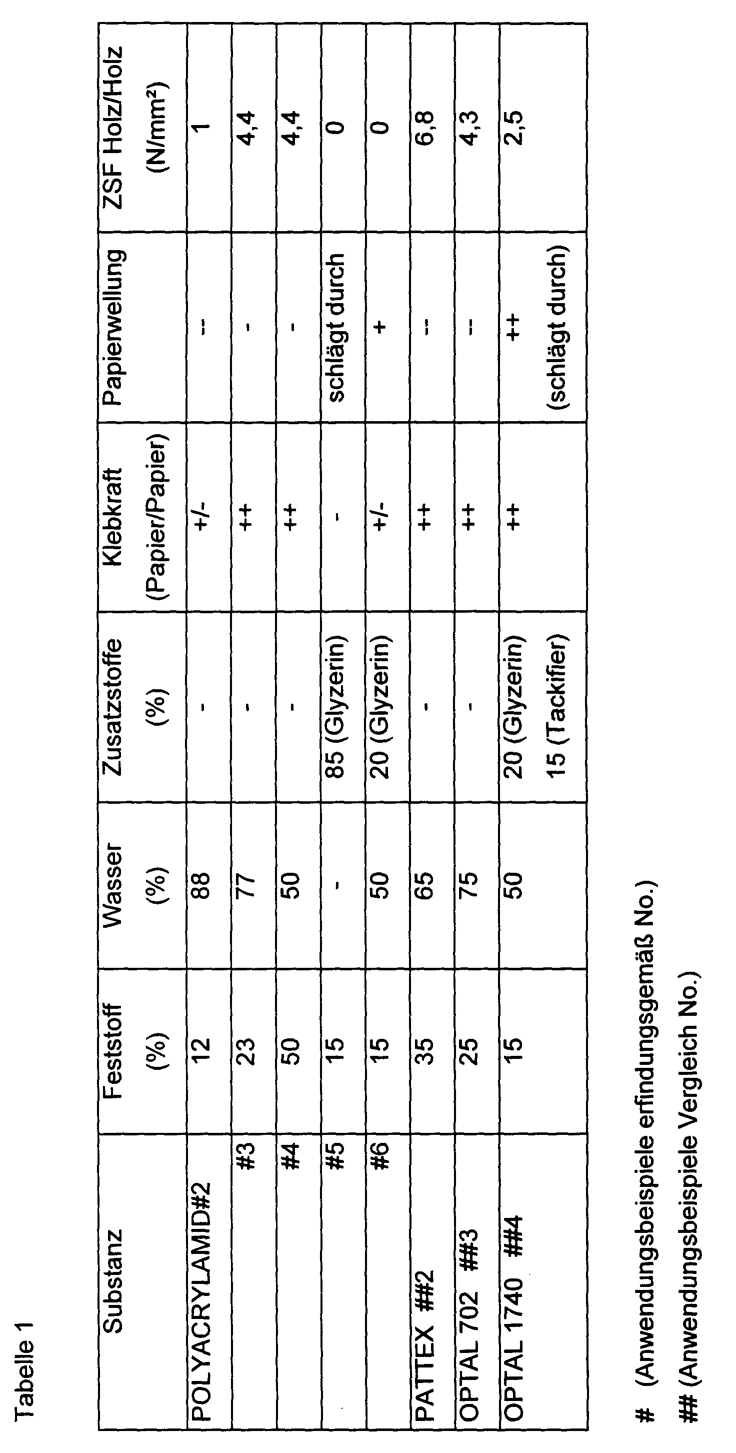

In der nachfolgenden Tabelle 2 werden weitere erfindungsgemäße Anwendungsbeispiele (Formulierungen 7-14) erstellt und weiteren gängigen Wasser enthaltenden Marktprodukten wie Klebstoffen auf Basis von Polyurethan (Pattex® Alleskleber), Casein- Dispersionen (Optal® 1740) sowie auf Basis von Maltodextrin (Pritt Pen) gegenübergestellt. Bei dem in der nachfolgenden Tabelle eingesetzten, klebrig machenden Mittel (Tackifier) handelt es sich um ein flüssiges Balsamharz, welches unter der Bezeichnung Flexin® D vertrieben wird.

Aus der nachfolgenden Tabelle 2 ergibt sich, daß die erfindungsgemäß als Klebstoff verwendeten Zusammensetzungen gegenüber diesen Marktprodukten bei einer deutlich geringeren Viskosität eine vergleichbare Klebkraft und eine mit den üblichen Kasein-Stärke-Dispersionen vergleichbare geringe Wellung zeigen.

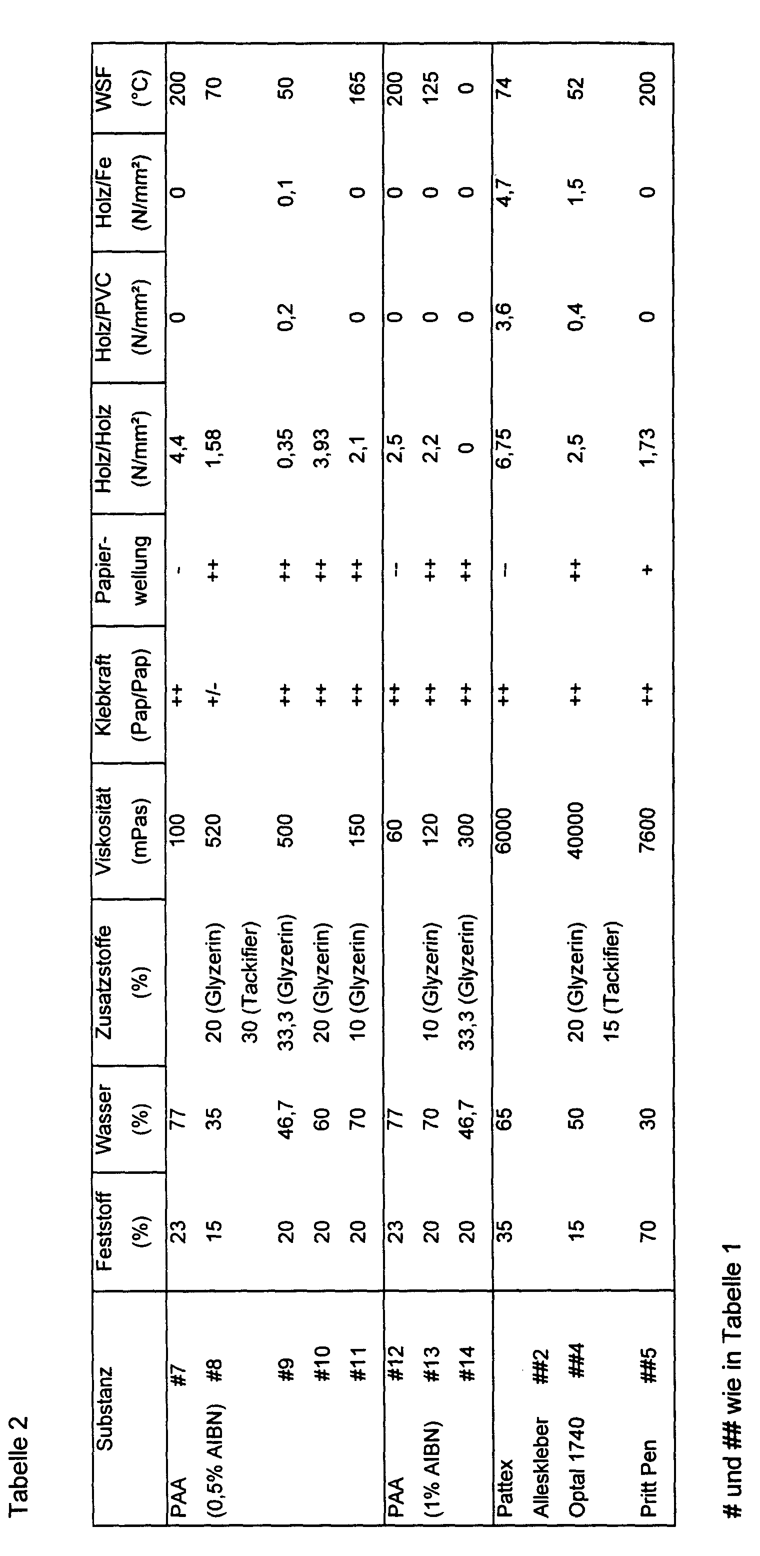

Um den Anwendungsbereich der erfindungsgemäß verwendeten polyacrylamidhaltigen Zusammensetzungen auch gegenüber lösemittelhaltigen Handelsprodukten auszutesten, wurde eine Mischung aus 102,3 g eines Polyacrylamids mit einer Molekularmasse von 4011 g/mol Gewichtsmittel von 14.033; Lösemittel Wasser; Standard: Polyethylenglykol, (13 Gew.-%) mit 637,4 g Wasser (81 Gew.-%) sowie 47,2 g Glyzerin (6 Gew.-%) vermischt, wobei sich eine Lösung mit einer bei 27 °C erhaltenen Brookfield-Viskosität von 56 mPas ergab. Diese Lösung wurde in eine Poly-Swing-Pumpflasche gegeben und im nachfolgend beschriebenen Test als Beispiel 15 bezeichnet.

Als Vergleich wurden lösungsmittelhaltige Produkte der 3M Deutschland GmbH mit der Produktbezeichnung "PhotoMount", Produktnummer 203A27GB5 in einer treibmittelhaltigen Sprühdose eingesetzt (Vergleichsprodukt 6). Ein weiteres lösemittelhaltiges Produkt war der Tesa Technicoll Sprühkleber der Beiersdorf AG, der ebenfalls über eine treibgashaltige Sprühdose appliziert wurde (Vergleichsklebstoff 7).

Bei den nachfolgend in Tabelle 3 zusammengefaßten Daten ergab sich bei dem erfindungsgemäß verwendeten Produkt nach 24 Stunden eine verbesserte Klebkraft gegenüber lösemittelhaltigen Produkten, wobei die Abbindezeit gegenüber dem lösemittelhaltigen Produkt (Vergleichsprodukt 6) um den Faktor 9 geringer ist, aber durch Zugabe von Glyzerin verändert werden kann.

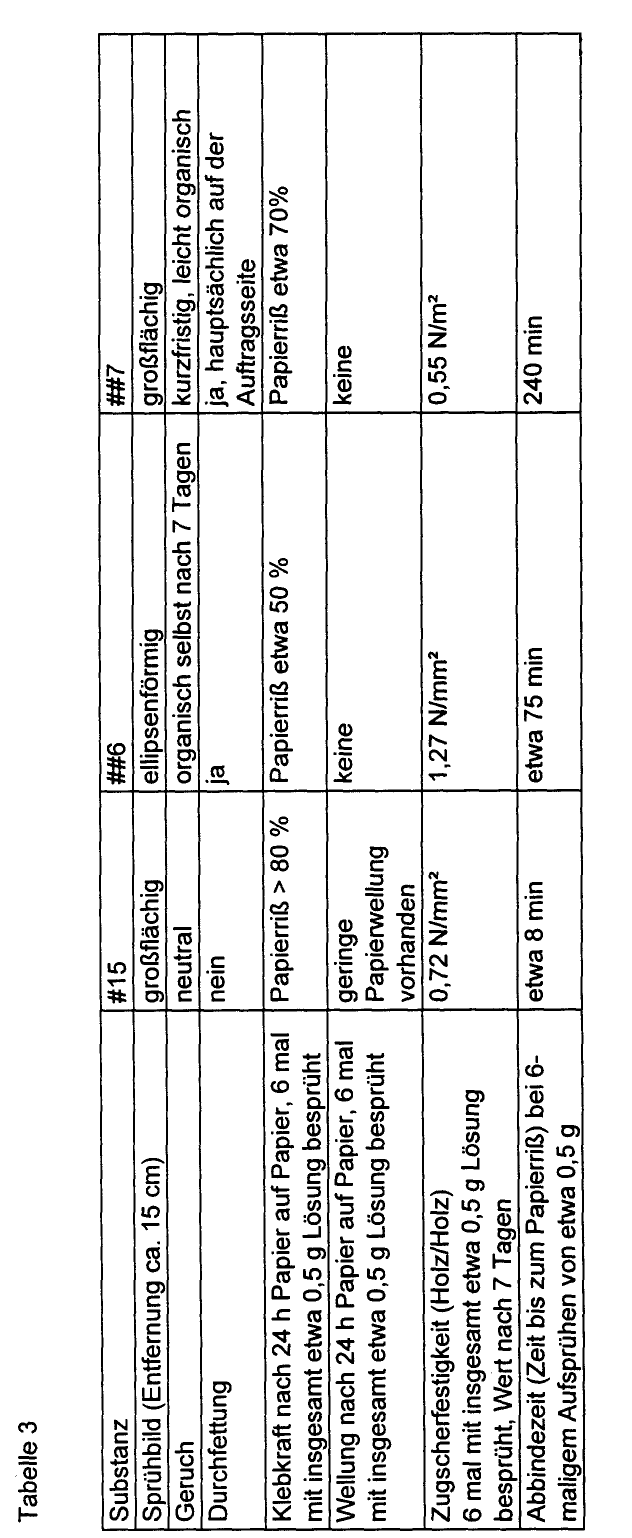

Um den Einfluß des Glyzeringehalts auf die Topfzeit bei den erfindungsgemäß verwendeten Polyacrylamidzusammensetzungen zu zeigen, wurde eine Mischung, die 20 Gew.-% Polyacrylamid, bezogen auf die Gesamtlösung, enthält und eine Molekularmasse, wie sie in Beispiel 15 definiert ist, aufweist. Eine derartige Zusammensetzung wurde mit steigenden Mengen an Glyzerin und Wasser als Rest versetzt. Es ergeben sich folgende Topfwerte gemäß nachfolgender Tabelle 4:

| Substanz | Polyacrylamid | Glyzerin | Wasser | Topfzeit (min) |
|---|---|---|---|---|
| #16 | 20 | 10 | 70 | 1,5 |
| #17 | 20 | 20 | 60 | 5 |
| #18 | 20 | 30 | 50 | 23 |

| | | | | |
|---|---|---|---|---|
| # wie in Tabelle 1 | | | | |

## Patentansprüche

1. Verwendung einer polyacrylamidhaltigen Zusammensetzung, wobei das Polyacrylamid eine Molekularmasse von 2.000 bis 8.000 g/mol, bestimmt mittels Gelpermeationschromatographie, besitzt und dieses Polyacrylamid als 15 Gew.-%ige wäßrige Lösung bei 25 °C noch eine Brookfield-Viskosität von 5 bis 500 mPas aufweist, für die flächige Verklebung von und/oder auf wasseraufsaugenden oder harten Oberflächen.

2. Verwendung nach Anspruch 1, **dadurch gekennzeichnet, daß** die Zusammensetzung weiterhin ein viskositätsregulierendes Additiv enthält.

3. Verwendung nach Anspruch 2, **dadurch gekennzeichnet, daß** das viskositätsregulierende Additiv Wasser und/oder ein ein- oder mehrwertiger Alkohol wie Ethan-1,2-diol, Propan-1,2-diol und/oder Propan-1,2,3-triol ist.

4. Verwendung nach vorstehenden Ansprüchen, **dadurch gekennzeichnet, daß** die Zusammensetzung ein die Klebrigkeit verstärkendes Mittel auf Basis eines Kolophoniumharzes und/oder dessen Derivat, vorzugsweise eines verseiften Derivats enthält.

5. Verwendung nach vorstehenden Ansprüchen, **dadurch gekennzeichnet, daß** das Polyacrylamid ein überwiegend Acrylamid enthaltendes Copolymeres, vorzugsweise mit einem Copolymergehalt von bis zu 15, insbesondere bis zu 5 Gew.-% ist.

6. Verwendung einer Zusammensetzung, enthaltend 5 bis 50 Gew.-%, vorzugsweise 10 bis 25 Gew.-% wenigstens eines Polyacrylamids, 50 bis 95 Gew.-%, vorzugsweise 75 bis 90 Gew.-% wenigstens eines viskositätsregulierenden Additivs, 0 bis 30 Gew.-%, vorzugsweise 0 bis 15 Gew.-% wenigstens eines die Klebrigkeit verbessernden Stoffes, 0 bis 10 Gew.-%, vorzugsweise 0 bis 5 Gew.-% eines wasserlöslichen oder in Wasser dispergierbaren Verflüssigungsmittels und 0 bis 35 Gew.-%, vorzugsweise 0 bis 25 Gew.-% wenigstens eines Treibmittels, für die flächige Verklebung von und/oder auf wasseraufsaugenden oder harten Oberflächen.

7. Verwendung nach einem der Ansprüche 1 bis 6 zur nicht wellenden Verklebung, insbesondere als Sprühklebstoff oder als Papierklebstoff.

8. Verwendung nach einem der vorstehenden Ansprüche, **gekennzeichnet durch** die Herstellung der polyacrylamidhaltigen Zusammensetzung, wobei man Acrylamid gegebenenfalls in Gegenwart von Comonomeren einer Lösungspolymerisation unterwirft und das Reaktionsprodukt aus der Reaktionsmischung abtrennt.

9. Verwendung der polyacrylamidhaltigen Zusammensetzung nach Ansprüchen 1 bis 6 oder hergestellt nach Anspruch 8 für die flächige Verklebung von und/oder auf wasseraufsaugenden oder harten Oberflächen durch Auftragen, Aufpinseln oder Aufsprühen.

10. Verwendung der polyacrylamidhaltigen Zusammensetzung nach Anspruch 9 zur Rutschfestausrüstung von Kunststoffoberflächen wie Polystyrol, Polycarbonat, Polyvinylchlorid, Polyethylen, Polypropylen und Polyethylenterephthalat, wobei die Oberflächen erst nach der Trocknung des Mittels in Kontakt gebracht werden.

## Claims

1. The use of a polyacrylamide-containing composition, the polyacrylamide having molecular weight of 2,000 to 8,000 g/mole, as determined by gel permeation chromatography, and a Brookfield viscosity of 5 to 500 mPas in the form of a 15% by weight solution at 25°C, for surface bonding of and/or to water-absorbing or hard surfaces.

2. The use claimed in claim 1, **characterized in that** the composition additionally contains a viscosity-regulating additive.

3. The use claimed in claim 2, **characterized in that** the viscosity-regulating additive is water and/or a monohydric or polyhydric alcohol, such as ethane-1,2-diol, propane-1,2-diol and/or propane-1,2,3-triol.

4. The use claimed in the preceding claims, **characterized in that** the composition contains a tackifier based on a rosin and/or derivative thereof, preferably a saponified derivative.

5. The use claimed in the preceding claims, **characterized in that** the polyacrylamide is a copolymer predominantly containing acrylamide, preferably with a copolymer content of up to 15% by weight and, more particularly, up to 5% by weight.

6. The use of a composition containing 5 to 50% by weight and preferably 10 to 25% by weight of at least one polyacrylamide, 50 to 95% by weight and preferably 75 to 90% by weight of at least one viscosity-regulating additive, 0 to 30% by weight and preferably 0 to 15% by weight of at least one tackifier, 0 to 10% by weight and preferably 0 to 5% by weight of a water-soluble or water-dispersible liquefier and 0 to 35% by weight and preferably 0 to 25% by weight of at least one propellent for surface bonding of and/or to water-absorbing or hard surfaces.

7. The use claimed in any of claims 1 to 6 for non-waving bonding, more particularly as a spray adhesive or as a paper adhesive.

8. The use claimed in any of the preceding claims, **characterized by** the production of the polyacrylamide composition, acrylamide being subjected to solution polymerization, optionally in the presence of comonomers, and the reaction product being removed from the reaction mixture.

9. The use of the polyacrylamide composition claimed in claims 1 to 6 or produced by the process claimed in claim 8 for surface bonding of and/or to water-absorbing or hard surfaces by application, brushing or spraying.

10. The use of the polyacrylamide composition claimed in claim 9 for the non-slip finishing of plastic surfaces, such as polystyrene, polycarbonate, polyvinyl chloride, polyethylene, polypropylene and polyethylene terephthalate, the surfaces only being brought into contact after drying of the composition.

## Revendications

1. Utilisation d'une composition contenant un polyacrylamide, le polyacrylamide présentant une masse moléculaire de 2 000 à 8 000 g/mole, déterminée au moyen de la chromatographie de perméation des gels, et ce polyacrylamide présentant encore sous forme de solution aqueuse à 15 % en poids à 25°C une viscosité Brookfield de 5 à 500 mPas, pour le collage surfacique de et/ou sur des surfaces absorbant l'eau ou dures.

2. Utilisation selon la revendication 1,
**caractérisée en ce que**
la composition contient en outre un additif régulateur de viscosité.

3. Utilisation selon la revendication 2,
**caractérisée en ce que**
l'additif régulateur de viscosité est l'eau et/ou un alcool mono- ou polyvalent comme l'éthane-1,2-diol, le propane-1,2-diol et/ou le propane-1,2,3-triol.

4. Utilisation selon les revendications précédentes,
**caractérisée en ce que**
la composition contient un agent renforçant l'adhérence, à base d'une résine de colophane et/ou de son dérivé, de préférence d'un dérivé saponifié.

5. Utilisation selon les revendications précédentes,
**caractérisée en ce que**
le polyacrylamide est un copolymère contenant principalement un acrylamide, de préférence avec une teneur en copolymère allant jusqu'à 15, en particulier allant jusqu'à 5 % en poids.

6. Utilisation d'une composition contenant de 5 à 50 % en poids, de préférence de 10 à 25 % en poids, d'au moins un polyacrylamide, de 50 à 95 % en poids, de préférence de 75 à 90 % en poids, d'au moins un additif régulateur de viscosité, de 0 à 30 % en poids, de préférence de 0 à 15 % en poids, d'au moins un corps améliorant l'adhérence, de 0 à 10 % en poids, de préférence de 0 à 5 % en poids, d'un agent de liquéfaction soluble dans l'eau ou dispersable dans l'eau et de 0 à 35 % en poids, de préférence de 0 à 25 % en poids, d'au moins un vecteur, pour le collage surfacique de et/ou sur des surfaces absorbant l'eau ou dures.

7. Utilisation selon l'une des revendications 1 à 6 pour le collage sans ondulation, en particulier sous forme d'adhésif pulvérisé ou adhésif sur papier.

8. Utilisation selon l'une des revendications précédentes,
**caractérisée par** la préparation de la composition contenant un polyacrylamide, dans laquelle on soumet l'acrylamide, le cas échéant en présence de comonomères, à une polymérisation en solution, et on sépare le produit de la réaction du mélange réactionnel.

9. Utilisation de la composition contenant un polyacrylamide selon les revendications 1 à 6, ou préparée selon la revendication 8 pour le collage surfacique et/ou sur des surfaces absorbant l'eau ou dures par dépôt, enduction ou pulvérisation.

10. Utilisation de la composition contenant un polyacrylamide selon la revendication 9, pour l'équipement anti-dérapant de surfaces de matière synthétique comme le polystyrène, le polycarbonate, le chlorure de polyvinyle, le polyéthylène, le polypropylène et le téréphtalate de polyéthylène, où l'on ne met les surfaces en contact qu'après séchage de l'agent.
